# EUROPEAN PATENT SPECIFICATION

(11) **EP 1 465 007 B1**
(45) Date of publication and mention of the grant of the patent: **26.07.2006**
(21) Application number: 03252163.5
(22) Date of filing: 04.04.2003
(51) Int. Cl.: G03B 17/56, F16M 11/12

(54) **Anchoring device for anchoring a camera monitor on a camera stand**
Befestigungsvorrichtung zur Sicherung von einem Kameramonitor an einem Kamerastativ
Dispositif de fixation sécurisant un monitor sur un pied de caméra

(43) Date of publication of application: 06.10.2004
(73) Proprietor: Ma, Pony, Wen-Shang Dist., Taipei City (TW)
(72) Inventor: Ma, Pony, Wen-Shang Dist., Taipei City (TW)
(74) Representative: Jenkins, Peter David

(56) References cited:
- DE-A- 19 519 528
- US-A- 4 341 452
- US-A- 5 326 058
- US-A- 5 797 568
- US-B1- 6 305 973
- US-B1- 6 374 752

## Description

The invention relates to an anchoring device for a camera monitor, more particularly to an anchoring device adapted to be mounted on a camera connecting plate of a camera stand so as to anchor a camera monitor on the camera stand.

US 5,797,568 discloses a multi-position television monitor stand which can be adjusted to accommodate different monitor sizes by adj usting the width and height of the various components of the stand.

US 5, 326, 058 discloses a monitor mounting plate for video equipment. The mounting plate is arranged such that the monitor moves commensurately with the video equipment and the plate is configured to allow it to fit with a range of tripod/camera combinations.

US 6,374,752 discloses an ergonomic computer workstation having U-shaped frames for mounting a monitor.

US 6,305,973 discloses an articulable projecting plug comprising a U-shaped frame.

US 4,341,452 discloses a triaxial universal camera mount assembly which permits a camera secured thereto to be independently or simultaneously pivotable about three axis.

DE 19519528 discloses a support device for a video camera. The video camera is located within a first bracket which has bearing support points connected with pivot point bearings on a second U-shape bracket and an L-shaped bracket is pivotably mounted on the first bracket and has a fixing point that can support a monitor.

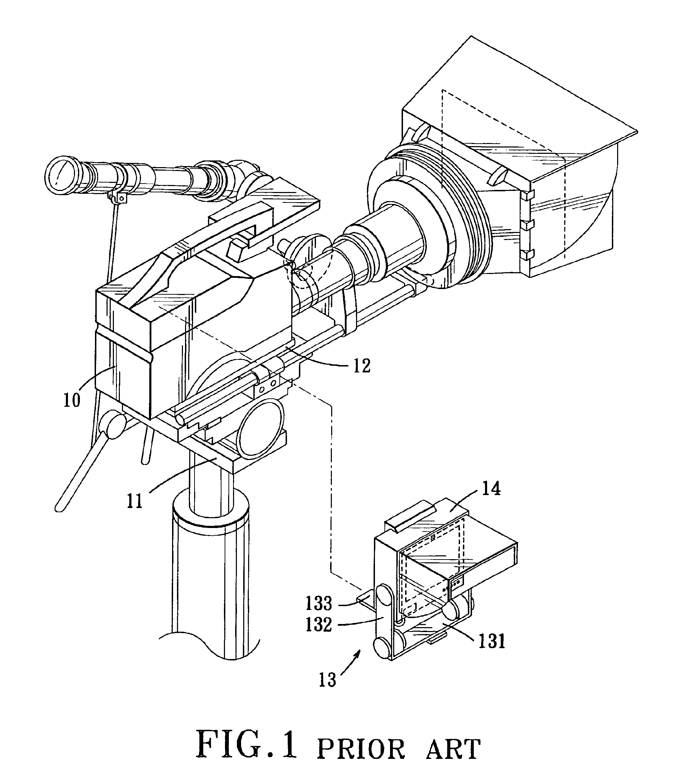

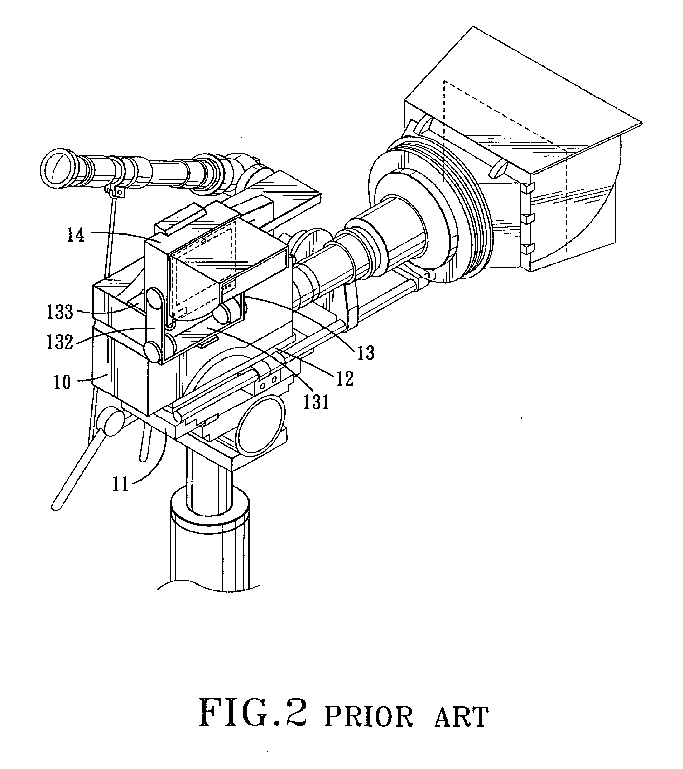

Referring to Figure 1, the bottom side of a camera 10 is connected to a camera connecting plate 12 to permit mounting of the camera 10 on a camera stand 11. The camera 10 is provided with a video output port (not shown) for connection to a monitor, thereby permitting real-time monitoring of the images captured by the camera 10. Figures 1 and 2 illustrate a conventional camera monitor 14 that is mounted directly on the camera 10 with the use of an anchoring device 13. The anchoring device 13 includes an elongate first arm 131 and a pair of second arms 132 which extend transversely from opposite ends of the first arm 131. The second arms 132 have free ends that are connected pivotally and respectively to opposite lateral sides of the camera monitor 14. The anchoring device 13 further includes an anchoring plate 133 having one end connected to a lower side of the first arm 131. The other end of the anchoring plate 133 is fastened onto the top side of the camera 10 with the use of screws. The camera monitor 14 is connected to the video output port of the camera 10 through a signal cable (not shown).

The following are some of the drawbacks associated with the aforesaid conventional anchoring device 13:
1. The camera monitor 14 can only be tilted upward and downward, and cannot be tilted sidewise. As such, the user can only view the camera monitor 14 from a fixed side of the camera 10, which results in inconvenience during use. Moreover, the anchoring device 13 does not permit viewing of the camera monitor 14 when the camera 10 is tilted sidewise.
2. Since the camera monitor 14 is fitted between the second arms 132 of the anchoring devices 13, the anchoring device 13 is custom-made for a camera monitor 14 with a specific width. In other words, different anchoring devices 13 must be prepared to accommodate different dimensions of camera monitors 14.
3. Since the anchoring device 13 is mounted on top of the camera 10, the total height of the camera 10 is increased, which can result in inconveniences during transport. Moreover, when the camera 10 is dismounted from the camera stand 11, aside from disengaging the camera 10 from the camera connecting plate 12, there is also a need to remove the anchoring device 13 from the camera 10, which results in added burden to the user.

Therefore, the object of the present invention is to provide an anchoring device for anchoring a camera monitor on a camera stand that can overcome the aforesaid drawbacks associated with the prior art.

Accordingly, the anchoring device of the present invention is adapted to be mounted on a camera connecting plate of a camera stand so as to anchor a camera monitor on the camera stand, and comprises an anchoring member and a mounting frame unit.

The anchoring member has a plate connecting portion adapted to be mounted fixedly on the camera connecting plate, and a frame connecting portion opposite to the plate connecting portion in a longitudinal direction.

The mounting frame unit is mounted on the frame connecting portion, is adapted for mounting the camera monitor on the anchoring member, and includes inner and outer frame members. The inner frame member is adapted to be mounted with the camera monitor, and has a first inner arm and a pair of second inner arms which extend transversely from opposite ends of the first inner arm. The outer frame member is mounted on the frame connecting portion, and has a first outer arm and a pair of second outer arms which extend transversely from opposite ends of the first outer arm. Each of the second outer arms has a distal end connected pivotally to a distal end of a respective one of the second inner arms such that the inner frame member is movably disposed in the outer frame member

The mounting frame unit further includes a fastener for fastening adjustably the camera monitor on the first inner arm. The first inner arm is formed with a slide slot therealong. The fastener extending through the slide slot and being adapted to engage threadedly the camera monitor.

Other features and advantages of the present invention will become apparent in the following detailed description of the preferred embodiment with reference to the accompanying drawings, of which:
Figure 1 is a perspective view showing a conventional anchoring device for a camera monitor when detached from a camera that is mounted on top of a camera stand;
Figure 2 is a perspective view showing the conventional anchoring device when mounted on the camera;
Figure 3 is an exploded perspective view of the preferred embodiment of an anchoring device for anchoring a camera monitor according to the present invention;
Figure 4 is a fragmentary schematic bottom view to illustrate a fastener on a first inner arm of an inner frame member of a mounting frame unit of the preferred embodiment;
Figure 5 is an assembled perspective view of the preferred embodiment when mounted on a camera connecting plate of a camera stand so as to anchor a camera monitor on the camera stand;
Figure 6 is a schematic view to illustrate how the camera monitor can be adjusted sidewise on the inner frame member;
Figure 7 is a schematic view to illustrate how tilt of the camera monitor can be adjusted when mounted on the preferred embodiment;
Figure 8 is a schematic view to illustrate how an outer frame member of the mounting frame unit can be adjusted sidewise relative to a connecting member;
Figure 9 is a perspective view to illustrate how the camera monitor can be rotated relative to the connecting member of the mounting frame unit;
Figure 10 is another perspective view illustrating the camera monitor when folded toward a lateral side of a camera on the camera stand; and
Figure 11 is a perspective view to illustrate how the height of the camera monitor can be adjusted when mounted on the preferred embodiment.

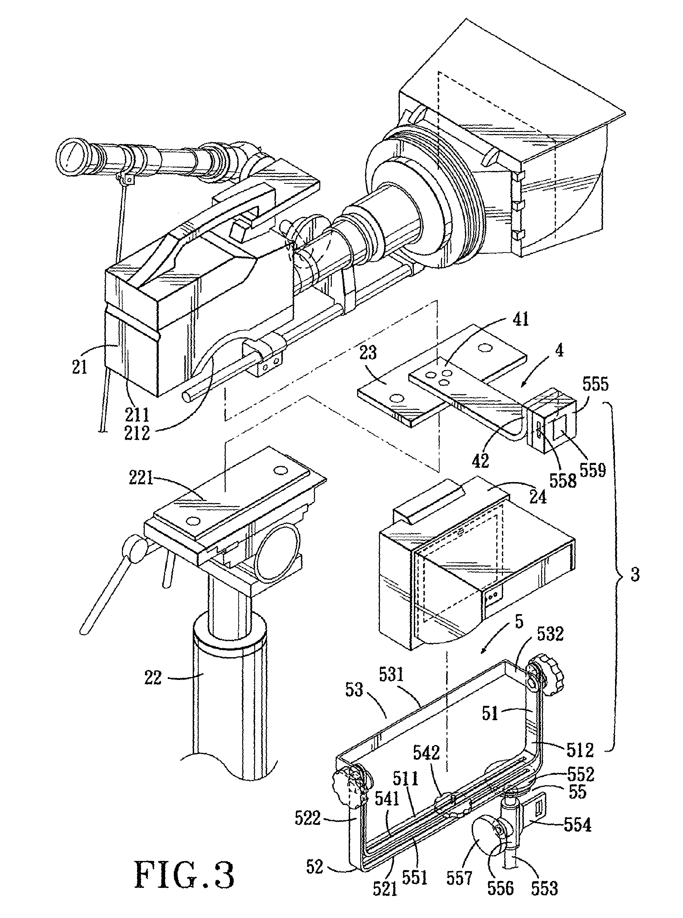

Referring to Figure 3, the bottom side 211 of a camera 21 is connected to a camera connecting plate 23 to permit mounting of the camera 21 on a platform 221 of a camera stand 22. The anchoring device 3 of the present invention is used to anchor a camera monitor 24 at the vicinity of the camera 21. By mounting the anchoring device 3 on the camera connecting plate 23 or on the camera stand 22, the camera monitor 24 will be positioned near the camera 21. However, as shown in Figure 3, since the camera connecting plate 23 is stacked on the platform 221 of the camera stand 22, there is no space available on the platform 221 for mounting the anchoring device 3. On the other hand, since the bottom side 211 of the camera 21 is usually formed with a groove 212 that permits resting of the camera 21 on a shoulder of a cameraman, a space is present between the camera 21 and the camera connecting plate 23 due to the groove 212. Accordingly, the anchoring device 3 of this invention is preferably adapted to be mounted in the space between the camera 21 and the camera connecting plate 23 so that the camera monitor 24 can be positioned near the camera 21 without altering the original designs of the camera 21, the camera connecting plate 23, and the camera stand 22. Nevertheless, if the original designs of the camera connecting plate 23 and the camera stand 22 are not to be maintained, it is apparent to those skilled in the art that the anchoring device 3 may be mounted on any other appropriate position on the camera connecting plate 23 or the camera stand 22.

As shown in Figure 3, the preferred embodiment of the anchoring device 3 according to this invention includes an anchoring member 4 and a mounting frame unit 5.

The anchoring member 4 has a plate connecting portion 41 adapted to be mounted fixedly on the camera connecting plate 23, such as with the use of screws, and a frame connecting portion 42 opposite to the plate connecting portion 41 in a longitudinal direction. In the embodiment of Figure 3, the frame connecting portion 42 projects relative to a right lateral side of the camera connecting plate 23.

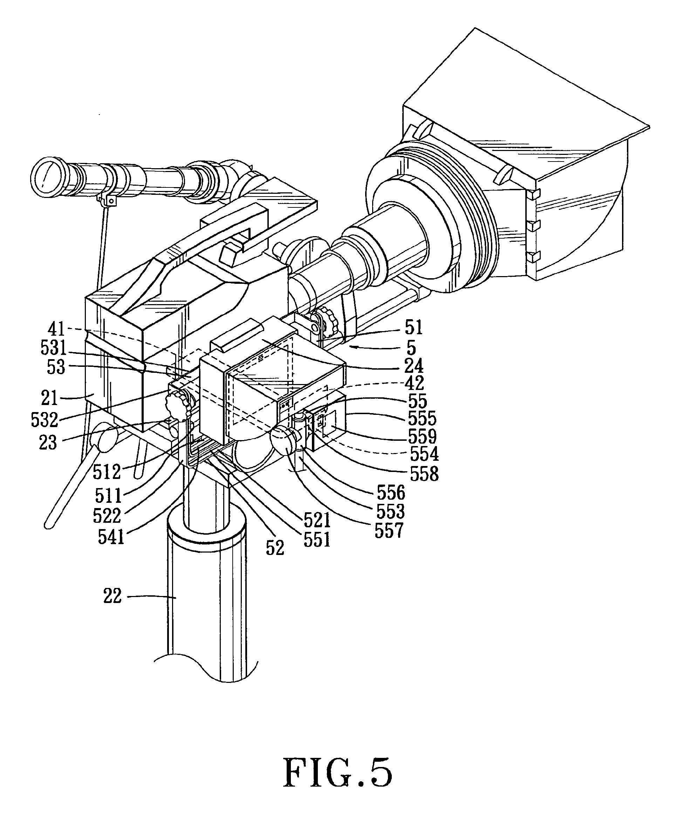

With further reference to Figure 5, the mounting frame unit 5 is mounted on the frame connecting portion 42 and is adapted for mounting the camera monitor 24 on the anchoring member 4. In this embodiment, the mounting frame unit 5 includes an inner frame member 51 and an outer frame member 52.

The inner frame member 51 is adapted to be mounted with the camera monitor 24, and has a first inner arm 511 and a pair of second inner arms 512 which extend transversely from opposite ends of the first inner arm 511.

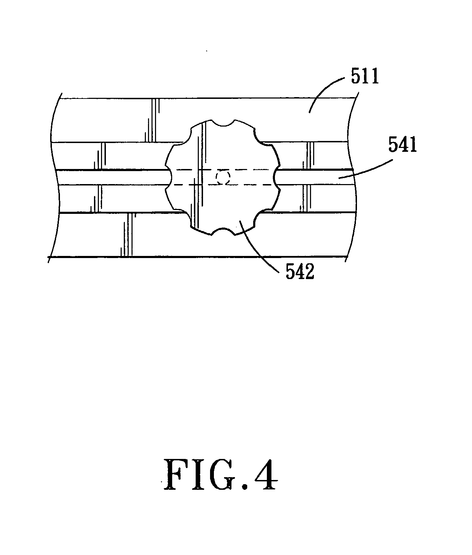

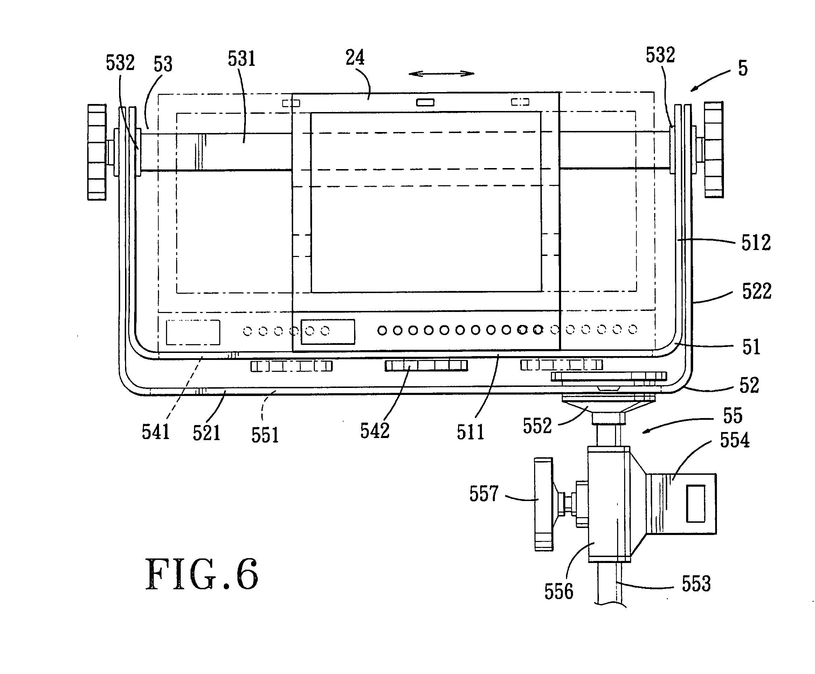

As shown in Figure 4, the first inner arm 511 is formed with a slide slot 541 therealong. A fastener 542 extends through the slide slot 541 and is adapted to engage threadedly the camera monitor 24 for fastening adjustably the camera monitor 24 on the first inner arm 511. Therefore, as shown in Figure 6, unlike the conventional anchoring manner of anchoring the camera monitor 24 at two fixedpoints, this embodiment practices single-point anchoring in view of the threaded engagement between the fastener 542 and the bottom side of the camera monitor 24. In this manner, it is no longer required to match the distance between the second inner arms 512 with the width of the camera monitor 24. Instead, what is required in this embodiment is that the width of the camera monitor 24 should be smaller than the distance between the second inner arms 512. Accordingly, different sizes of camera monitors 24 can be installed on the inner frame member 51, as long as the width of the former is shorter than the distance between the second inner arms 512. Moreover, the fastener 542 can be loosened from the camera monitor 24 so as to permit movement of the camera monitor 24 along the slide slot 541, and can be subsequently tightened on the camera monitor 24 so as to retain the camera monitor 24 at a desired position on the first inner arm 511.

Referring once again to Figures 3 and 5, the outer frame member 52 is mounted on the frame connecting portion 42, and has a first outer arm 521 and a pair of second outer arms 522 which extend transversely from opposite ends of the first outer arm 521. The first outer arm 521 is slightly longer than the first inner arm 511. Each of the second outer arms 522 is slightly longer than the second inner arms 512.

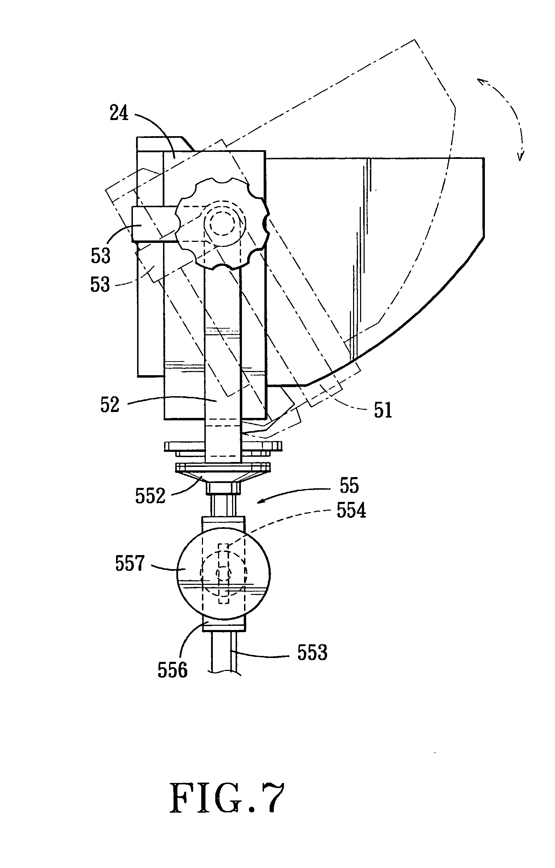

When assembled, each of the second outer arms 522 has a distal end connected pivotally to a distal end of a respective one of the second inner arms 512 such that the inner frame member 51 is movably disposed in the outer frame member 52. Accordingly, tilt of the camera monitor 24 can be adjusted, as best shown in Figure 7.

In addition, the first outer arm 521 is formed with a slide slot 551 therealong. The mounting frame unit 5 further includes a connecting member 55 for mounting adjustably the first outer arm 521 on the frame connecting portion 42 of the anchoring member 4. The connecting member 55 includes a head portion 552 movably connected to the first outer arm 521 in the slide slot 551, an upright rod 553 connected at one end to the head portion 552, an engaging member 554 having a first end 556 movably disposed on the rod 553 and a second end, and a releasable fastener 555 for interconnecting releasably and non-rotatably the second end of the engaging member 554 and the frame connecting portion 42 of the anchoring member 4.

The releasable fastener 555, which is conventional in construction, is mounted on the frame connecting portion 42 of the anchoring member 4, has one side formed with an insert slot 558, and includes a release button 559. When inserted into the insert slot 558, the second end of the engaging member 554 is retained therein by a spring-loaded mechanism (not shown) of the fastener 555. Thereafter, when the release button 559 is pressed, the spring-loaded mechanism will be disengaged from the second end of the engaging member 554 so as to permit removal of the latter from the insert slot 558.

In this embodiment, the first end 556 of the engaging member 554 is tubular and is sleeved slidably and rotatably on the rod 553. The connecting member 55 further includes a releasable locking unit 557 for arresting selectively relative movement between the first end 556 of the engaging member 554 and the rod 553. When the locking unit 557 is rotated in a first direction, the first end 556 of the engaging member 554 is tightened on the rod 553. When the locking unit 557 is rotated in a second direction, the first end 556 of the engaging member 554 is loosened from the rod 553 such that the rod 553 can move up and down or rotate relative to the first end 556 of the engaging member 554. Since the specific configuration of the locking unit 557 is known in the art, a detailed description of the same will be omitted herein for the sake of brevity.

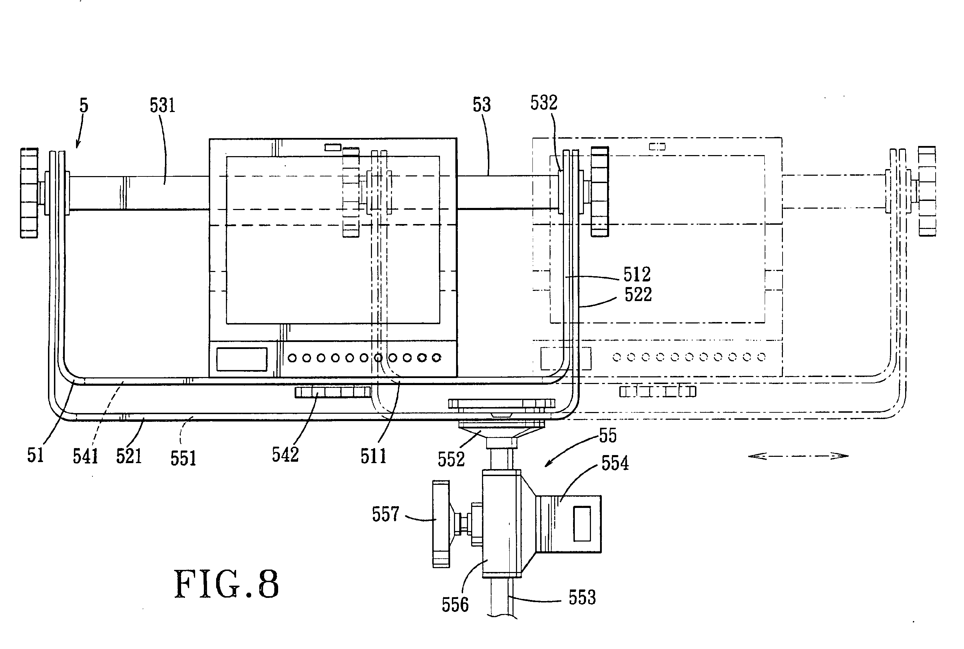

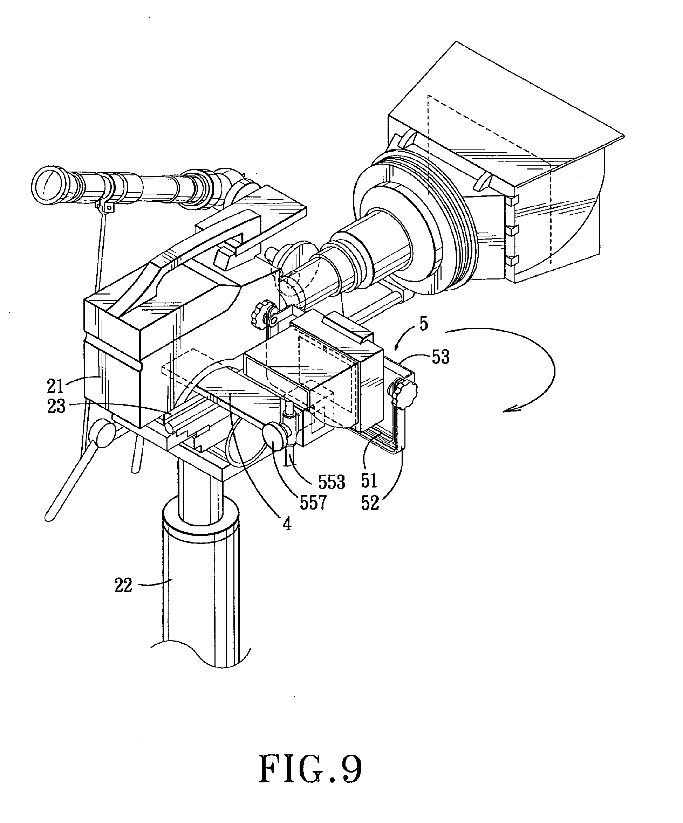

Therefore, in view of the construction of the connecting member 55, the head portion 552 can be slid along the slide groove 551 to move the outer frame member 52 relative to the rod 553, as shown in Figure 8. As described in the foregoing, by operating the locking unit 557, the rod 553 can be moved up and down so as to adjust the height of the camera monitor 24, and the engaging member 554 can be rotated about the rod 553 within a 360-degree range, as shown in Figure 9. In summary, the anchoring device 3 of this invention allows the camera monitor 24 to be tilted up and down, moved to the left and to the right, and rotated within a 360-degree range as desired by the user to ease viewing restrictions commonly encountered in the prior art.

In this embodiment, the mounting frame unit 5 further includes a support member 53 that has a first arm portion 531 and a pair of second arm portions 532 which extend transversely from opposite ends of the first arm portion 531 and which have distal ends connected transversely and respectively to the distal ends of the second inner arms 512. The first arm portion 531 of the support member 53 serves to abut against the rear side of the camera monitor 24 for providing added support to the latter, as best shown in Figure 5.

Referring again to Figure 3, in use, the plate connecting portion 41 of the anchoring member 4 is first fastened onto the camera connecting plate 23. Then, the fastener 542 is used to mount the camera monitor 24 on the inner frame member 51. Thereafter, the camera 21 is secured on the camera connecting plate 23, and the assembly of the camera 21 and the camera connecting plate 23 is subsequently mounted on the platform 221 of the camera stand 22. Finally, the second end of the engaging member 554 is inserted into the insert slot 558 to complete the process of anchoring the camera monitor 24 on the camera stand 22.

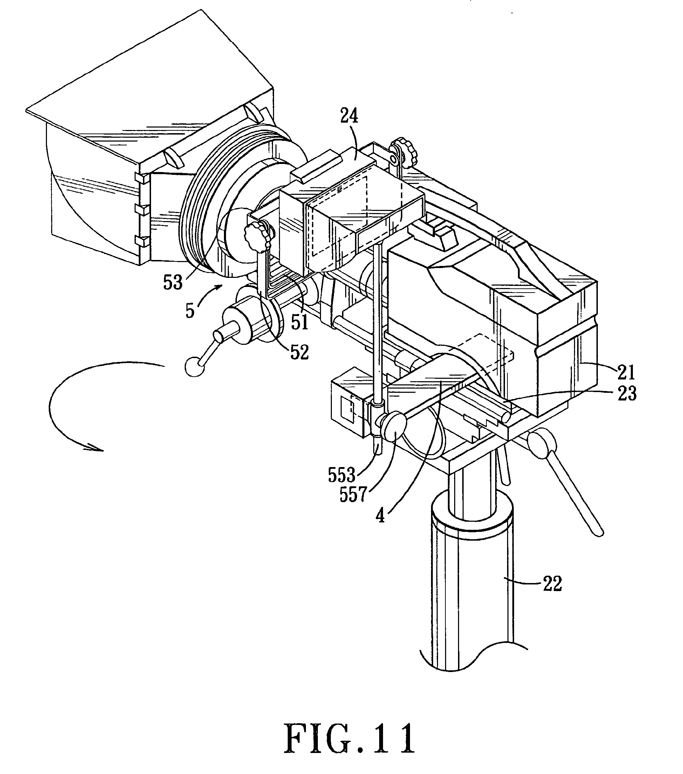

While the anchoring device 3 is illustrated as being mounted on the right side of the camera 21, it is apparent to those skilled in the art that the mounting position of the anchoring device 3 can be flexibly adjusted to suit the user's needs. For example, as shown in Figure 11, the anchoring device 3 may be mounted such that the camera monitor 24 thereon can act as a camera viewfinder.

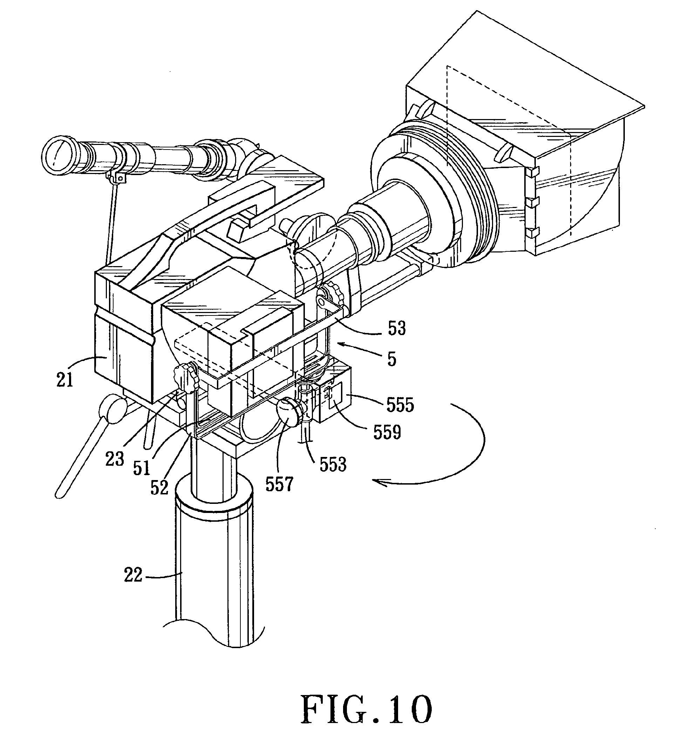

In sum, the anchoring device 3 of this invention has the following advantages:
1. The camera monitor 24 can be adjusted in different directions. As detailed in the foregoing, the anchoring device 3 permits tilting adjustment (see Figure 7), left and right shifting (see Figure 8), and rotation of the camera monitor 24 (see Figure 9). Moreover, when the camera monitor 24 is not in use, it can be folded toward the camera 21 (see Figure 10) so that the total volume of the camera 21 is not undesirably increased to facilitate transport and so as to avoid damage to the camera monitor 24 due to a lower risk of collision.
2. It is evident from the foregoing description that the anchoring device 3 of this invention can be applied to different camera monitors 4 having widths smaller than the distance between the second inner arms 512 of the inner frame member 51.
3. When dismounting the camera 21 from the camera stand 22, it is only required to disengage the camera 21 from the camera connecting plate 23. The operation as such is more convenient and time saving as compared to the prior art, which involves a necessary further step of dismounting the anchoring device from the camera.

Moreover, when the camera monitor 24 is not in use, it is only required to press the release button 559 to permit removal of the mounting frame unit 5 from the anchoring member 4, which is more convenient as compared to the complicated screw-removal operations needed when removing the camera monitor from the conventional anchoring device.

## Claims

1. An anchoring device (3) adapted to be mounted on a camera connecting plate (23) of a camera stand (22) so as to anchor a camera monitor (24) on the camera stand (22), said anchoring device (3) including
an anchoring member (4) having a plate connecting portion (41) adapted to be mounted fixedly on the camera connecting plate (23), and a frame connecting portion (42) opposite to said plate connecting portion (41) in a longitudinal direction, and
a mounting frame unit (5) mounted on said frame connecting portion (42) and adapted for mounting the camera monitor (24) on said anchoring member (4),
wherein said mounting frame unit (5) includes:
an inner frame member (51) adapted to be mounted with the camera monitor (24) and having a first inner arm (511) and a pair of second inner arms (512) which extend transversely from opposite ends of said first inner arm (511); and
an outer frame member (52) mounted on said frame connecting portion (42) and having a first outer arm (521) and a pair of second outer arms (522) which extend transversely from opposite ends of said first outer arm (521) ;
each of said second outer arms (522) having a distal end connected pivotally to a distal end of a respective one of said second inner arms (512);
said inner frame member (51) being movably disposed in said outer frame member (52) wherein said mounting frame unit (5) further includes a fastener (542) for fastening adjustably the camera monitor (24) on said first inner arm (511) and wherein first inner arm (511) is formed with a slide slot (541) therealong, said fastener (542) extending through said slide slot (541) and being adapted to engage threadedly the camera monitor (24) .

2. The anchoring device (3) as claimed in Claim 1, wherein said mounting frame unit (5) further includes a support member (53), said support member (53) including a first arm portion (531) andapairof second arm portions (532) which extend transversely from opposite ends of said first arm portion (531) and which have distal ends connected transversely and respectively to said distal ends of said second inner arms (512).

3. The anchoring device (3) as claimed in Claim 1, wherein said mounting frame unit (5) further includes a connecting member (55) for mounting adjustably said first outer arm (521) on said frame connecting portion (42).

4. The anchoring device (3) as claimed in Claim 3, further wherein said first outer arm (521) is formed with a slide slot (551) therealong, said connecting member (55) having a head portion (552) movably connected to said first outer arm (521) in said slide slot (551).

5. The anchoring device (3) as claimed in Claim 4, wherein said connecting member (55) further includes:
an upright rod (553) connected at one end to said head portion (552);
an engaging member (554) having a first end (556) movably disposed on said rod (553) and a second end; and
a releasable fastener (555) for interconnecting releasably and non-rotatably said second end of said engaging member (554) and said frame connecting portion (42).

6. The anchoring device (3) as claimed in Claim 5, wherein said first end (556) of said engaging member (554) is tubular and is sleeved slidably and rotatably on said rod (553), saidconnectingmember (55) further including a releasable locking unit (557) for arresting selectively relative movement between said first end (556) of said engaging member (554) and said rod (553).

## Patentansprüche

1. Verankerungsvorrichtung (3), die eingerichtet ist, um an einer Kameraverbindungsplatte (23) eines Kamerastativs (22) angebracht zu sein, um einen Kameramonitor bzw. eine Kamerakontrolleinrichtung (24) an dem Kamerastativ (22) zu verankern, wobei die Verankerungsvorrichtung (3) Folgendes enthält:
ein Verankerungsglied (4), das einen Plattenverbindungsabschnitt (41), der eingerichtet ist, um starr an der Kameraverbindungsplatte (23) angebracht zu sein, und einen Rahmenverbindungsabschnitt (42) hat, und zwar entgegengesetzt zu dem Plattenverbindungsabschnitt (41) in einer Längsrichtung, und
eine Anbringungsrahmeneinheit (5), die an dem Rahmenverbindungsabschnitt (42) angebracht ist und zum Anbringen des Kameramonitors bzw. der Kamerakontrolleinrichtung (24) an dem Verankerungsglied (4) eingerichtet ist,
wobei die Anbringungsrahmeneinheit (5) Folgendes enthält:
ein inneres Rahmenglied (51), das eingerichtet ist, um an dem Kameramonitor bzw. der Kamerakontrolleinrichtung (24) angebracht zu sein, und einen ersten inneren Arm (511) und ein Paar zweite innere Arme (512) hat, welche sich quer von den entgegengesetzten Enden des ersten inneren Armes (511) erstrecken; und
ein äußeres Rahmenglied (52), das an dem Rahmenverbindungsabschnitt (42) angebracht ist und einen ersten äußeren Arm (521) und ein Paar zweite äußere Arme (522) hat, welche sich quer von entgegengesetzten Enden des ersten äußeren Armes (521) erstrecken;
wobei jeder der zweiten äußeren Arme (522) ein distales Ende hat, das schwenkbar bzw. drehbar mit einem distalen Ende eines jeweiligen Armes der zweiten inneren Arme (512) verbunden ist;
wobei das innere Rahmenglied (51) bewegbar an dem äußeren Rahmenglied (52) angeordnet ist, wobei die Anbringungsrahmeneinheit (5) ferner ein Befestigungselement (542) zum justierbaren Befestigen des Kameramonitors bzw. der Kamerakontrolleinrichtung (24) an dem ersten inneren Arm (511) enthält, und wobei der erste innere Arm (511) mit einem Gleitschlitz (541) da entlang gebildet ist, wobei sich das Befestigungselement (542) durch den Gleitschlitz (541) erstreckt und eingerichtet ist, um gewindemäßig mit dem Kameramonitor bzw. der Kamerakontrolleinrichtung (24) im Eingriff zu sein.

2. Verankerungsvorrichtung (3), wie in Anspruch 1 beansprucht, wobei die Anbringungsrahmeneinheit (5) ferner ein Trage- bzw. Stützglied (53) enthält, wobei das Trage- bzw. Stützglied (53) einen ersten Armabschnitt (531) und ein Paar zweite Armabschnitte (532) enthält, welche sich quer von den entgegengesetzten Enden des ersten Armabschnittes (531) erstrecken und welche distale Enden haben, die quer und jeweils mit den distalen Enden der zweiten inneren Arme (512) verbunden sind.

3. Verankerungsvorrichtung (3), wie in Anspruch 1 beansprucht, wobei die Anbringungsrahmeneinheit (5) ferner ein Verbindungsglied (55) zum justierbaren Anbringen des ersten äußeren Armes (521) an dem Rahmenverbindungsabschnitt (42) enthält.

4. Verankerungsvorrichtung (3), wie in Anspruch 3 beansprucht, wobei ferner der erste äußere Arm (521) mit einem Gleitschlitz (551) da entlang gebildet ist, wobei das Verbindungsglied (55), das einen Kopfabschnitt (552) hat, bewegbar mit dem ersten äußeren Arm (521) in dem Gleitschlitz (551) verbunden ist.

5. Verankerungsvorrichtung (3), wie in Anspruch 4 beansprucht, wobei das Verbindungsglied (55) ferner Folgendes enthält:
eine aufrechte bzw. senkrechte Stange (553), die mit einem Ende mit dem Kopfabschnitt (552) verbunden ist;
ein Eingriffsglied (554), das ein erstes Ende (556), das bewegbar an der Stange (553) angeordnet ist, und ein zweites Ende hat;
und
ein freigebbares bzw. lösbares Befestigungselement (555) zum freigebbaren bzw.
lösbaren und nicht drehbaren miteinander Verbinden des zweiten Endes des Eingriffsgliedes (554) und des Rahmenverbindungsabschnittes (42).

6. Verankerungsvorrichtung (3), wie in Anspruch 5 beansprucht, wobei das erste Ende (556) des Eingriffsgliedes (554) röhrenförmig ist und buchsenmäßig bzw. hüllenmäßig an der Stange (553) drehbar ist, wobei das Verbindungsglied (55) ferner eine freigebbare bzw. lösbare Verriegelungs- bzw. Klemmeinheit (557) zum wahlweisen Hemmen bzw. Arretieren relativer Bewegung zwischen dem ersten Ende (556) des Eingriffsgliedes (554) und der Stange (553) enthält.

## Revendications

1. Dispositif d'ancrage (3) adapté à être monté sur une plaque de liaison d'appareil photographique (23) d'un pied d'appareil photographique (22) de façon à ancrer un contrôleur d'appareil photographique (24) sur le pied d'appareil photographique (22), le dispositif d'ancrage (3) comprenant :
un élément d'ancrage (4) comportant une partie de connexion de plaque (41) adapté à être monté de façon fixe sur la plaque de connexion d'appareil photographique (23) et une partie de connexion de châssis (42) opposée à la partie de connexion de plaque (41) dans une direction longitudinale, et
un module de châssis de montage (5) monté sur la partie de connexion de châssis (42) et adapté à monter le contrôleur d'appareil photographique (24) sur l'élément d'ancrage (4),
dans lequel le module de châssis de montage (5) comprend :
un élément de châssis interne (51) adapté à être monté avec le contrôleur d'appareil photographique (24) et ayant un premier bras interne (511) et deux seconds bras internes (512) qui s'étendent transversalement à partir de côtés opposés du premier bras interne (511) ; et
un élément de châssis externe (52) monté sur la partie de liaison de châssis (42) et ayant un premier bras externe (521) et deux seconds bras externes (522) qui s'étendent transversalement à partir de côtés opposés du premier bras externe (521) ;
chacun des seconds bras externes (522) ayant une extrémité distale connectée à pivotement à une extrémité distale de l'un respectif des seconds bras internes (512) ;
l'élément de châssis interne (51) étant disposé de façon mobile dans l'élément de châssis externe (52), le module de châssis de montage (5) comprenant en outre un moyen de fixation (542) pour fixer de façon réglable le contrôleur d'appareil photographique (24) sur le premier bras interne (511) et dans lequel le premier bras interne (511) comporte une fente de cliché (541), le moyen de fixation (542) s'étendant au travers de la fente de cliché (541) et étant adapté à se visser sur le contrôleur d'appareil photographique (24).

2. Dispositif d'ancrage (3) selon la revendication 1, dans lequel le module de châssis de montage (5) comprend en outre un élément support (53), l'élément support (53) comprenant une première partie de bras (531) et deux secondes parties de bras (532) qui s'étendent transversalement à partir de l'extrémité opposée de la première partie de bras (531) et qui ont des extrémités distales connectées transversalement et respectivement aux extrémités distales des seconds bras internes (512).

3. Dispositif d'ancrage (3) selon la revendication 1, dans lequel le module de châssis de montage (5) comprend en outre un élément de connexion (55) pour montage de façon réglable du premier bras externe (521) sur la partie de liaison de châssis (42).

4. Dispositif d'ancrage (3) selon la revendication 3, dans lequel en outre le premier bras externe (521) comporte une première fente de cliché (551), l'élément de connexion (55) ayant une partie de tête (552) connectée de façon mobile au premier bras externe (521) dans la fente de cliché (551).

5. Dispositif d'ancrage (3) selon la revendication 4, dans lequel l'élément de connexion (55) comprend en outre:
une tige verticale (553) connectée à une extrémité de la partie de tête (552);
un élément de blocage (554) ayant une première extrémité (556) disposée de façon mobile sur la tige (553) et une seconde extrémité; et
un moyen de fixation libérable (555) pour relier de façon libérable et non à rotation la seconde extrémité de l'élément de contact (554) et la partie de liaison de châssis (42).

6. Dispositif d'ancrage (3) selon la revendication 5, dans lequel la première extrémité (556) de l'élément de contact (554) est tubulaire et comporte un manchon monté à coulissement et à rotation sur la tige (553), ledit élément de connexion (55) comprenant en outre un module de blocage libérable (557) pour stopper sélectivement un mouvement relatif entre la première extrémité (556) de l'élément de contact (554) et la tige (553).
